# EUROPÄISCHE PATENTSCHRIFT

(11) **EP 2 347 102 B1**
(45) Veröffentlichungstag und Bekanntmachung des Hinweises auf die Patenterteilung: **24.02.2016**
(21) Anmeldenummer: 08871797.0
(22) Anmeldetag: 03.12.2008
(51) Int. Cl.: F01K 25/06

(54) **VERFAHREN ZUM BETREIBEN EINES THERMODYNAMISCHEN KREISLAUFES SOWIE THERMODYNAMISCHER KREISLAUF**
METHOD FOR OPERATING A THERMODYNAMIC CYCLE, AND THERMODYNAMIC CYCLE
PROCÉDÉ DE FONCTIONNEMENT D'UN CIRCUIT THERMODYNAMIQUE ET CIRCUIT THERMODYNAMIQUE

(30) Priorität: 01.02.2008 DE 102008007249; 02.09.2008 DE 102008045450
(43) Veröffentlichungstag der Anmeldung: 27.07.2011
(73) Patentinhaber: Siemens Aktiengesellschaft, 80333 München (DE)
(72) Erfinder: LENGERT, Jörg, 91475 Lonnerstadt-Ailsbach (DE); LENGERT, Martina, 91475 Lonnerstadt/Ailsbach (DE); LUTZ, Roland, 91056 Erlangen (DE)
(86) Internationale Anmeldenummer: PCT/EP2008/066673
(87) Internationale Veröffentlichungsnummer: WO 2009/095127

(56) Entgegenhaltungen:
- EP-A1- 1 070 830
- EP-A1- 1 503 047
- EP-B1- 1 613 841
- JP-A- 10 205 308
- US-A- 3 120 839
- US-A1- 2004 055 302

## Beschreibung

Die Erfindung betrifft ein Verfahren zum Betreiben eines thermodynamischen Kreislaufes gemäß Oberbegriff des Patentanspruchs 1 sowie einen thermodynamischen Kreislauf gemäß Oberbegriff des Patentanspruchs 7; ein derartiger Kreislauf ist z.B. durch die EP 1 613 841 B1 offenbart.

Wärmekraftwerke nutzen thermodynamische Kreisprozesse zur Umwandlung von Wärme in mechanische bzw. elektrische Energie. Konventionelle Wärmekraftwerke erzeugen die Wärme durch die Verbrennung von Brennstoffen, vor allem den fossilen Energieträgern Kohle, Öl und Gas. Die Kreisprozesse werden hierbei z.B. auf Basis des klassischen Rankine-Kreisprozesses mit Wasser als Arbeitsmittel betrieben. Sein hoher Siedepunkt macht Wasser allerdings vor allem bei der Nutzung von Wärmequellen mit Temperaturen zwischen 100 bis 200°C, z.B. geothermischen Flüssigkeiten oder Abwärme aus Verbrennungsprozessen, aufgrund mangelnder Wirtschaftlichkeit unattraktiv.

Für Wärmequellen mit solch niedriger Temperatur wurden in den letzten Jahren verschiedenste Technologien entwickelt, die es ermöglichen, deren Wärme mit gutem Wirkungsgrad in mechanische bzw. elektrische Energie umzuwandeln. Neben dem Rankine-Prozess mit organischem Arbeitsmittel (organic rankine cycle, ORC) zeichnet sich vor allem der so genannte Kalina-Kreisprozess durch deutlich bessere Wirkungsgrade gegenüber dem klassischen Rankine-Prozess aus.

Auf der Basis des Kalina-Kreisprozesses wurden diverse Kreisläufe für unterschiedlichste Anwendungen entwickelt. Diese Kreisläufe verwenden als Arbeitsmittel anstatt Wasser ein Zweistoffgemisch (z.B. Ammoniak und Wasser), wobei der nichtisotherme Siede- und Kondensationsvorgang des Gemisches ausgenutzt wird, um den Wirkungsgrad des Kreislaufs im Vergleich zu dem Rankine-Kreislauf zu erhöhen.

Ein derartiger, für Temperaturen von 100 bis 200°C, insbesondere von 100 bis 140°C, besonders geeigneter Kalinakreislauf ist aus der EP 1 613 841 B1 bekannt. Ein weiterer derartiger bekannter Kreislauf ist aus der EP 1 070 830 A1 bekannt.

Von konventionellen Wasser-Dampf-Kreisläufen ist es bereits bekannt, zum Anfahren eines derartigen Kreislaufes den erzeugten Dampf zuerst an der Turbine vorbeizuführen, bis sich ein für den Betrieb der Turbine ausreichender Druck in dem Kreislauf aufgebaut hat. Wird dieses Prinzip jedoch bei einem vorstehend erwähnten Kalinakreislauf angewandt, so kann es während des Anfahrens des Kreislaufes zu Pulsationen des Drucks im Kreislauf kommen, die so groß werden können, dass eine Notabschaltung des Kreislaufes erfolgen muss.

Es ist deshalb Aufgabe vorliegender Erfindung, ein Verfahren zum Betrieb eines Kreislaufes gemäß Oberbegriff des Patentanspruchs 1 anzugeben, bei dem beim Anfahren derartige Pulsationen verhindert werden können. Es ist außerdem Aufgabe vorliegender Erfindung, einen Kreislauf, insbesondere zur Durchführung des erfindungsgemäßen Verfahrens, anzugeben, mit dem derartige Pulsationen verhindert werden können.

Die Lösung der auf das Verfahren gerichteten Aufgabe ist Gegenstand des Patentanspruchs 1. Vorteilhafte Ausgestaltungen sind Gegenstand der Ansprüche 2 bis 5. Die Lösung der auf den thermodynamischen Kreislauf gerichteten Aufgabe ist Gegenstand des Patentanspruchs 6. Vorteilhafte Ausgestaltungen sind Gegenstand der Patentansprüche 7 bis 10.

Die Erfindung geht hierbei von der Erkenntnis aus, dass beim Anfahren dem ersten Wärmetauscher sehr viel Energie zugeführt wird, wenn die durch den Separator abgetrennte flüssige Phase und die dampfförmige Phase vor dem ersten Wärmetauscher zusammengeführt werden. Dies führt dazu, dass deren komplette Energie in den ersten Wärmetauscher geleitet wird und durch die Wärmeübertragung auf dessen Primärseite eine starke Verdampfung des flüssigen Arbeitsmittels herbeigeführt wird. Hierdurch kommt es zu starken Veränderungen der Druckverhältnisse vom Eintritt in den ersten Wärmetauscher bis zum Austritt aus dem zweiten Wärmetauscher, insbesondere wenn der Druck des Arbeitsmittels am Austritt aus dem zweiten Wärmetauscher bzw. hinter dem Separator gemessen und als Regelgröße für den Kreislauf herangezogen wird. Aufgrund der sich verändernden Druckverhältnisse und den damit einhergehenden Regeleingriffen können Verdampfungsprozesse hervorgerufen werden, die auch wieder plötzlich zusammenfallen können und hierdurch Druck-Pulsationen im Kreislauf erzeugen.

Als Arbeitsmittel wird ein Mehrstoff-Gemisch verwendet, vorzugsweise handelt es sich um ein Zweistoff-Gemisch.

Durch das Vorbeileiten der abgetrennten dampfförmigen Phase sowohl an der Entspannungseinrichtung als auch an dem ersten Wärmetauscher vorbei wird ein zu hoher Wärmeeintrag in den ersten Wärmetauscher und somit eine zu hohe Wärmeübertragung an das flüssige Arbeitsmittel verhindert. Hierdurch kann eine zu starke Verdampfung des flüssigen Arbeitsmittels in dem ersten Wärmetauscher verhindert und somit die Pulsationen sicher unterbunden werden.

Von Vorteil werden bei dem abgekühlten Arbeitsmittelstrom eine flüssige Phase und eine dampfförmige Phase voneinander getrennt und anschließend wieder zusammengeführt. Hierdurch kann das Arbeitsmittel vor dessen Zufuhr zu dem dritten Wärmetauscher homogenisiert und somit der Wirkungsgrad des Kreislaufes verbessert werden.

Der erfindungsgemäße Kreislauf zeichnet sich durch eine Umgehungsleitung aus, die von einer Leitung zwischen dem Separator und der Entspannungseinrichtung abzweigt und nach dem ersten Wärmetauscher in eine Leitung zwischen dem ersten Wärmetauscher und dem dritten Wärmetauscher mündet.

Die für das erfindungsgemäße Verfahren genannten Vorteile und Überlegungen gelten entsprechend für den erfindungsgemäßen Kreislauf.

Von Vorteil ist zur Homogenisierung des Arbeitsmittels vor dessen Zufuhr zu dem dritten Wärmetauscher und somit zur Wirkungsgradverbesserung des Kreislaufes in die Leitung zwischen dem ersten Wärmetauscher und dem dritten Wärmetauscher zwischen der Einmündung der Umgehungsleitung und dem dritten Wärmetauscher ein weiterer Separator zum Trennen einer flüssigen Phase von einer dampfförmigen Phase und ein Mischer zum Mischen der von dem weiteren Separator abgetrennten flüssigen und dampfförmigen Phase geschaltet.

Gemäß einer Ausgestaltung der Erfindung wird als Arbeitsmittel ein Zweistoff-Gemisch verwendet. Bei dem Zweistoff-Gemisch handelt es sich insbesondere um ein Ammoniak-Wasser-Gemisch. Aufgrund der nicht-isothermen Verdampfung und Kondensation eines solchen Gemisches kann ein besonders hoher Wirkungsgrad des Kreislaufes erzielt werden.

Eine besonders umweltfreundliche Energiegewinnung ist durch die Verwendung einer geothermischen Flüssigkeit, insbesondere Thermalwasser, aus einer Geothermalquelle als Wärmequelle möglich. Als Wärmequelle können aber auch Abgase (Rauchgase) von Gas- und/oder Dampfturbinenanlagen oder die in industriellen Produktionsprozessen (z.B. bei der Stahlproduktion) erzeugte Wärme verwendet werden.

Ein hoher Wirkungsgrad des Kreislaufes kann hierbei auch dann erzielt werden, wenn die Wärmequelle eine Temperatur von 100°C bis 200°C, insbesondere 100°C bis 140°C, aufweist.

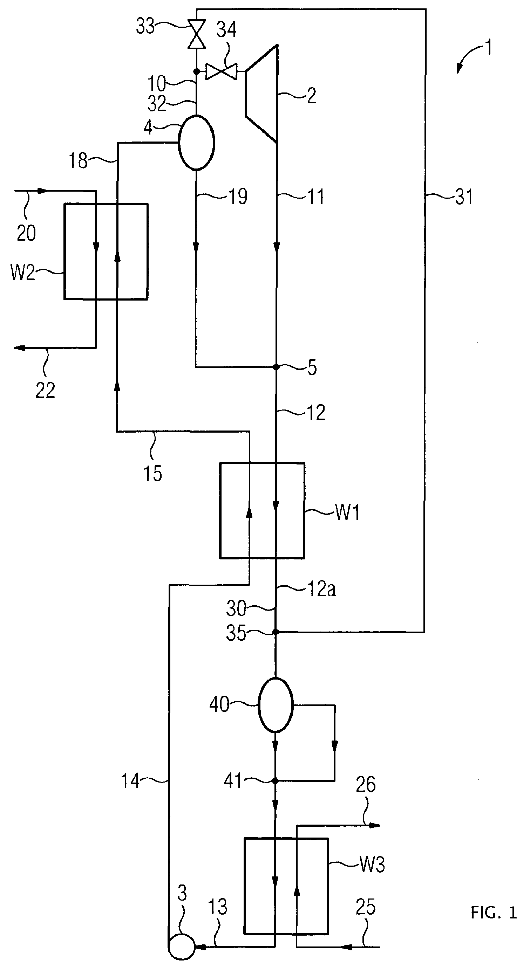

Die Erfindung sowie weitere vorteilhafte Ausgestaltungen der Erfindung gemäß den Merkmalen der Unteransprüche werden im Folgenden anhand eines Ausführungsbeispieles in der Figur näher erläutert. Diese zeigt einen erfindungsgemäßen thermody namischen Kreislauf in vereinfachter, schematischer Darstellung.
Ein in der Figur gezeigter thermodynamischer Kreislauf 1 umfasst einen ersten Wärmetauscher (Vorwärmer) W1, einen zweiten Wärmetauscher (Verdampfer) W2 und einen dritten Wärmetauscher (Kondensator) W3.

Der zweite Wärmetauscher W2 steht primärseitig mit einer externen Wärmequelle in Wärmekontakt, in dem dargestellten Ausführungsbeispiel wird er primärseitig von heißem Thermalwasser 20 einer nicht näher dargestellten Geothermalquelle durchflossen, und ist sekundärseitig zum einen mit dem ersten Wärmetauscher W1 und zum anderen mit einem Separator 4 verbunden. Der Separator 4 dient zum Trennen einer dampfförmigen Phase von einer flüssigen Phase eines teilweise verdampften Arbeitsmittels. Ein dampfseitiger Ausgang des Separators 4 ist mit einer Turbine 2 als Entspannungseinrichtung verbunden. Die Turbine 2 ist ausgangsseitig mit einer Zusammenführung in Form eines Mischers 5 verbunden. Der Mischer 5 ist zusätzlich noch mit einem Flüssigkeitsausgang des Separators 4 verbunden ist. Ausgangsseitig ist der Mischer 5 mit der Sekundärseite des ersten Wärmetauschers W1 verbunden. Dieser ist sekundärseitig wiederum über eine Leitung 30 mit der Primärseite des sekundärseitig von Kühlwasser 25 durchflossenen dritten Wärmetauschers (Kondensator) W3 verbunden.

Eine Umgehungsleitung 31 dient zur Umgehung der Turbine 2 und des ersten Wärmetauschers W1 für die in dem Separator 4 abgetrennte dampfförmige Phase. Die Umgehungsleitung 31 zweigt von einer Leitung 32 zwischen dem Separator 4 und der Turbine 2 ab und mündet nach dem ersten Wärmetauscher W1 in die Leitung 30 zwischen dem ersten Wärmetauscher W1 und dem dritten Wärmetauscher W3. Ventile 33, 34 dienen zur Steuerung und/oder Regelung der Zufuhr an dampfförmiger Phase 10 in die Umgehungsleitung 31 bzw. in die Turbine 2.

In die Leitung 30 ist zwischen dem ersten Wärmetauscher W1 und dem dritten Wärmetauscher W3 zwischen der Einmündung 35 der Umgehungsleitung 31 und dem dritten Wärmetauscher W3 ein weiterer Separator 40 zum Trennen einer flüssige Phase von einer dampfförmigen Phase und ein weiterer Mischer 41 zum Mischen der von dem Separator 40 abgetrennten flüssigen Phase mit der abgetrennten dampfförmigen Phase geschaltet.

Der dritte Wärmetauscher (Kondensator) W3 ist an seinem primärseitigen Ausgang, ggf. über einen nicht näher dargestellten Kondensattank, über eine Pumpe 3 mit der Primärseite des ersten Wärmetauschers W1 verbunden. Die Primärseite des ersten Wärmetauschers W1 ist wiederum mit der Sekundärseite des bereits erwähnten zweiten Wärmetauschers W2 verbunden.

Als Arbeitsmittel wird in dem Kreislauf 1 ein Zweistoff-Gemisch aus Wasser und Ammoniak verwendet, welches somit eine nicht isotherme Verdampfung und Kondensation aufweist.

Bei einem normalen Betrieb des Kreislaufes 1 liegt das Arbeitsmittel nach dem dritten Wärmetauscher (Kondensator) W3 in einem flüssigen Zustand als flüssiger Arbeitsmittelstrom 13 vor. Mit Hilfe der Pumpe 3 wird der flüssige Arbeitsmittelstrom 13 auf einen erhöhten Druck gepumpt und ein druckbeaufschlagter, flüssiger Arbeitsmittelstrom 14 erzeugt. Es ist dabei natürlich auch möglich, dass der flüssige Arbeitsmittelstrom 13 nach dem dritten Wärmetauscher (Kondensator) W3 zuerst einem Kondensattank zugeführt, dort zwischengespeichert und von dort mittels der Pumpe 3 entnommen und auf erhöhten Druck gebracht wird.

Der druckbeaufschlagte, flüssige Arbeitsmittelstrom 14 wird der Primärseite des ersten Wärmetauschers W1 zugeführt und durch Teilkondensation eines sekundärseitig durch den ersten Wärmetauscher W1 geführten entspannten Arbeitsmittelstromes 12 erwärmt und sogar teilweise verdampft, so dass primärseitig nach dem ersten Wärmetauscher W1 ein erster teilweise verdampfter Arbeitsmittelstrom 15 und sekundärseitig ein teilkondensierter, entspannter Arbeitsmittelstrom 12a vorliegen. Der Dampfanteil im ersten teilweise verdampften Arbeitsmittelstrom 15 beträgt z.B. 15 %.

Der erste teilweise verdampfte Arbeitsmittelstrom 15 wird anschließend der Sekundärseite des zweiten Wärmetauschers W2 zugeführt.

Primärseitig wird der zweite Wärmetauscher W2 von dem heißem Thermalwasser 20 durchströmt, das den zweiten Wärmetauscher W2 als abgekühltes Thermalwasser 22 verlässt. In dem zweiten Wärmetauscher W2 wird der erste teilweise verdampfte Arbeitsmittelstrom 15 durch Wärmeübertragung von dem heißen Thermalwasser 20 und somit Abkühlung des Thermalwassers 20 noch weiter verdampft und ein zweiter zumindest teilweise verdampfter Arbeitsmittelstrom 18 erzeugt. Der zweite teilweise verdampfte Arbeitsmittelstrom 18 wird dem Separator 4 zugeführt, in dem die dampfförmige Phase 10 von der flüssigen Phase 19 getrennt wird. Die dampfförmige Phase 10 wird anschließende in der Turbine 2 entspannt und ihre Energie in eine nutzbare Form, z.B. über einen nicht dargestellten Generator in Strom, umgewandelt und eine entspannte dampfförmige Phase 11 erzeugt. Hierzu ist das Ventil 34 geöffnet und das Ventil 33 geschlossen.

In dem Mischer 5 werden die entspannte dampfförmige Phase 11 und die in dem Separator 4 abgetrennte flüssige Phase 19 wieder zusammengeführt und ein entspannter Arbeitsmittelstrom 12 gebildet.

Der entspannte Arbeitsmittelstrom 12 wird in dem ersten Wärmetauscher W1 teilkondensiert und der teilkondensierte, entspannte Arbeitsmittelstrom 12a erzeugt. Der teilkondensierte, entspannte Arbeitsmittelstrom 12a wird anschließend in dem dritten Wärmetauscher (Kondensator) W3 mit Hilfe des (zulaufenden) Kühlwasserstromes 25 kondensiert und der flüssige Arbeitsmittelstrom 13 erzeugt. Die durch die Kondensation des entspannten Arbeitsmittelstroms 12a an den Kühlwasserstrom 25 übertragene Wärme wird durch den ablaufenden Kühlwasserstrom 26 abgeführt.

In einer Abwandlung des Kreislaufes 1 kann in dem ersten Wärmetauscher W1 primärseitig statt einer bereits teilweisen Verdampfung des Arbeitsmittels auch nur eine Erwärmung des Arbeitsmittels erfolgen. Die zumindest teilweise Verdampfung des Arbeitsmittels kann dann vollständig in dem zweiten Wärmetauscher W2 erfolgen.

In einer weiteren Abwandlung des Kreislaufes 1 kann in den Kreislauf 1 zwischen den ersten Wärmetauscher W1 und den zweiten Wärmetauscher W2 ein zusätzlicher vierter Wärmetauscher zur Übertragung von Wärme der in dem Separator 4 abgetrennten flüssigen Phase 19 zu dem erwärmten oder bereits teilweise verdampften zweiten Arbeitsmittelstrom 15 vor dessen Zufuhr zu dem zweiten Wärmetauscher W2 geschaltet sein.

Zum Anfahren des Kreislaufes wird durch Schließen des Ventiles 34 vorerst die Zufuhr von dampfförmiger Phase 10 zu der Turbine 2 unterbunden. Statt dessen wird das Ventil 33 geöffnet und die durch den Separator 4 abgetrennte dampfförmige Phase 10 über die Umgehungsleitung 31 an der Turbine 2 und dem ersten Wärmetauscher W1 vorbeigeleitet. Die von dem Separator 4 abgetrennte flüssige Phase wird - wie auch im normalen Betrieb des Kreislaufes 1 - über den Mischer 5 dem ersten Wärmetauscher W1 zugeführt und darin durch Wärmeübertragung an den flüssigen Arbeitsmittelstrom 14 abgekühlt. Nach dem ersten Wärmetauscher W1 werden die abgekühlte abgetrennte flüssige Phase und die abgetrennte dampfförmige Phase 10 zu einem abgekühlten Arbeitsmittelstrom zusammengeführt.

Vor der Zufuhr der zusammengeführten Phasen zu dem dritten Wärmetauscher W3 wird zur Homogenisierung des abgekühlten Arbeitsmittelstromes in dem Separator 40 eine flüssige Phase und eine dampfförmigen Phase des abgekühlten Arbeitsmittelsstroms voneinander getrennt und anschließend über den Mischer 41 wieder zusammengeführt.

Durch die Vorbeiführung der dampfförmigen Phase an dem ersten Wärmetauscher W1 wird beim Anfahren des Kreislaufes eine zu große Wärmeübertragung an den flüssigen Arbeitsmittelstrom auf der Primärseite des ersten Wärmetauschers W1 und somit eine unerwünscht hohe und zu Druckpulsationen in dem Kreislauf führende Verdampfung des flüssigen Arbeitsmittelstroms 14 in dem ersten Wärmetauscher W1 vermieden.

Die Erfindung wurde vorstehend anhand bevorzugter Ausführungsbeispiele beschrieben, kann generell aber nicht als auf diese Ausführungsbeispiele beschränkt angesehen werden. Es besteht vielmehr die Möglichkeit einer Vielzahl von Variationen und Modifikationen der Erfindung bzw. dieser Ausführungsbeispiele. Zum Beispiel können zusätzlich Ventile in den Kreislauf geschaltet sein.

## Patentansprüche

1. Verfahren zum Betreiben eines thermodynamischen Kreislaufes, wobei als Arbeitsmittel ein Mehrstoff-Gemisch verwendet wird und der zumindest die folgenden Komponenten umfasst:
- einen ersten Wärmetauscher (W1) zur Erzeugung eines ersten erwärmten oder teilweise verdampften Arbeitsmittelstroms (15) durch Erwärmen oder teilweises Verdampfen eines flüssigen Arbeitsmittelstroms (14) durch Wärmeübertragung von einem entspannten Arbeitsmittelstrom (12);
- einen zweiten Wärmetauscher (W2) zur Erzeugung eines zweiten zumindest teilweise verdampften Arbeitsmittelstroms (18) durch zumindest teilweises Verdampfen oder weiteres Verdampfen des ersten Arbeitsmittelstroms (15) mit Wärme, die von einer externen Wärmequelle (20) übertragen wird;
- einen dritten Wärmetauscher (W3) zum vollständigen Kondensieren des entspannten Arbeitsmittelstroms (12 bzw. 12a);
- einen Separator (4) zum Trennen einer flüssige Phase (19) von einer dampfförmigen Phase (10) des zweiten Arbeitsmittelstroms (18);
- eine Entspannungseinrichtung (2), insbesondere eine Turbine, zum Entspannen der dampfförmigen Phase (10), Umwandeln ihrer Energie in eine nutzbare Form und Erzeugen einer entspannten dampfförmigen Phase (11);
- eine Zusammenführung (5) zum Erzeugen des entspannten Arbeitsmittelstroms (12) durch ein Zusammenführen der flüssigen Phase und der entspannten dampfförmigen Phase;
**dadurch gekennzeichnet, dass** zum Anfahren des Kreislaufes
- die durch den Separator (4) abgetrennte dampfförmige Phase (10) an der Entspannungseinrichtung (2) und dem ersten Wärmetauscher (W1) vorbei geleitet wird,
- die von dem Separator (4) abgetrennte flüssige Phase (19) über die Zusammenführung (5) dem ersten Wärmetauscher (W1) zugeführt und darin durch Wärmeübertragung an den flüssigen Arbeitsmittelstrom (14) abgekühlt wird und
- nach dem ersten Wärmetauscher (W1) die abgekühlte abgetrennte flüssige Phase und die abgetrennte dampfförmige Phase (10) zu einem abgekühlten Arbeitsmittelstrom zusammengeführt werden.

2. Verfahren nach Anspruch 1, wobei eine flüssige Phase und eine dampfförmigen Phase des abgekühlten Arbeitsmittelsstroms voneinander getrennt und anschließend wieder zusammengeführt werden.

3. Verfahren nach Anspruch 2,
wobei als Mehrstoff-Gemisch ein Zweistoff-Gemisch, insbesondere ein Ammoniak-Wasser-Gemisch, verwendet wird.

4. Verfahren nach einem der vorhergehenden Ansprüche,
wobei als externe Wärmequelle (20) eine geothermische Flüssigkeit, insbesondere Thermalwasser, verwendet wird.

5. Verfahren nach einem der vorhergehenden Ansprüche,
wobei die Wärmequelle (20) eine Temperatur von 100°C bis 200°C, insbesondere von 100°C bis 140°C, aufweist.

6. Thermodynamischer Kreislauf, insbesondere zur Durchführung des Verfahrens nach einem der vorhergehenden Ansprüche, umfassend zumindest
- einen ersten Wärmetauscher (W1) zur Erzeugung eines ersten erwärmten oder teilweise verdampften Arbeitsmittelstroms (15) durch Erwärmen oder teilweises Verdampfen eines flüssigen Arbeitsmittelstroms (14) durch Wärmeübertragung von einem entspannten Arbeitsmittelstrom (12);
- einen zweiten Wärmetauscher (W2) zur Erzeugung eines zweiten zumindest teilweise verdampften Arbeitsmittelstroms (18) durch zumindest teilweises Verdampfen oder weiteres Verdampfen des ersten Arbeitsmittelstroms (15) mit Wärme, die von einer externen Wärmequelle (20) übertragen wird;
- einen dritten Wärmetauscher (W3) zum vollständigen Kondensieren des entspannten Arbeitsmittelstroms (12a);
- einen Separator (4) zum Trennen einer flüssige Phase (19) von einer dampfförmigen Phase (10) des zweiten Arbeitsmittelstroms (18);
- eine Entspannungseinrichtung (2), insbesondere eine Turbine, zum Entspannen der dampfförmigen Phase (10), Umwandeln ihrer Energie in eine nutzbare Form und Erzeugen einer entspannten dampfförmigen Phase (11);
- eine Zusammenführung (5) zum Erzeugen des entspannten Arbeitsmittelstroms (12) durch ein Zusammenführen der flüssigen Phase (19) und der entspannten dampfförmigen Phase (11) ;
und wobei das Arbeitsmittel des thermodynamischen Kreislaufs aus einem Mehrstoff-Gemisch besteht;
**gekennzeichnet durch** eine Umgehungsleitung (31) zur Umgehung der Entspannungseinrichtung (2) und des ersten Wärmetauschers (W1), die von einer Leitung (32) zwischen dem Separator (4) und der Entspannungseinrichtung (2) abzweigt und in eine Leitung (30) zwischen dem ersten Wärmetauscher (W1) und dem dritten Wärmetauscher (W3) mündet.

7. Thermodynamischer Kreislauf nach Anspruch 6, wobei in die Leitung (30) zwischen dem ersten Wärmetauscher (W1) und dem dritten Wärmetauscher (W3) zwischen der Einmündung (35) der Umgehungsleitung (31) und dem dritten Wärmetauscher (W3) ein weiterer Separator (40) zum Trennen einer flüssige Phase von einer dampfförmigen Phase und ein Mischer (41) zum Mischen der durch den weiteren Separator (40) abgetrennten flüssigen und dampfförmigen Phase geschaltet ist.

8. Thermodynamischer Kreislauf nach Anspruch 7,
wobei das Mehrstoffgemisch ein Zweistoffgemisch, insbesondere ein Ammoniak-Wasser-Gemisch, ist.

9. Thermodynamischer Kreislauf nach einem der Ansprüche 6 bis 8, mit einer geothermischen Flüssigkeit, insbesondere Thermalwasser, als externer Wärmequelle (20).

10. Thermodynamischer Kreislauf nach einem der Ansprüche 6 bis 9, wobei die externe Wärmequelle (20) eine Temperatur von 100°C bis 200°C, insbesondere von 100°C bis 140°C, aufweist.

## Claims

1. Method for operating a thermodynamic circuit, wherein a multiple-substance mixture is used as the working medium which comprises at least the following components:
- a first heat exchanger (W1) for producing a first heated or partially vaporized working medium flow (15) by heating or partially vaporizing a liquid working medium flow (14) by heat transfer from an expanded working medium flow (12);
- a second heat exchanger (W2) for producing a second at least partially vaporized working medium flow (18) by at least partially vaporizing or further vaporizing the first working medium flow (15) with heat which is transferred from an external heat source (20);
- a third heat exchanger (W3) for completely condensing the expanded working medium flow (12 or 12a);
- a separator (4) for separating a liquid phase (19) from a vapor phase (10) of the second working medium flow (18);
- an expansion device (2), in particular a turbine, for expanding the vapor phase (10), converting its energy to a usable form, and producing an expanded vapor phase (11);
- a combination point (5) for producing the expanded working medium flow (12) by combining the liquid phase and the expanded vapor phase;
**characterized in that**, in order to start the circuit,
- the vapor phase (10) which has been separated by the separator (4) bypasses the expansion device (2) and the first heat exchanger (W1),
- the liquid phase (19) which has been separated by the separator (4) is supplied via the combination point (5) to the first heat exchanger (W1), where it is cooled down by heat transfer to the liquid working medium flow (14), and
- after the first heat exchanger (W1), the cooled-down separated liquid phase and the separated vapor phase (10) are combined to form a cooled-down working medium flow.

2. Method according to Claim 1, wherein a liquid phase and a vapor phase of the cooled-down working medium flow are separated from one another, and are then combined again.

3. Method according to Claim 2,
wherein a two-substance mixture, in particular an ammonia-water mixture, is used as the multiple-substance mixture.

4. Method according to one of the preceding claims,
wherein a geothermal liquid, in particular thermal water, is used as the external heat source (20).

5. Method according to one of the preceding claims,
wherein the heat source (20) is at a temperature of 100°C to 200°C, in particular from 100°C to 140°C.

6. Thermodynamic circuit, in particular for carrying out the method according to one of the preceding claims, comprising at least
- a first heat exchanger (W1) for producing a first heated or partially vaporized working medium flow (15) by heating or partially vaporizing a liquid working medium flow (14) by heat transfer from an expanded working medium flow (12);
- a second heat exchanger (W2) for producing a second at least partially vaporized working medium flow (18) by at least partially vaporizing or further vaporizing the first working medium flow (15) with heat which is transferred from an external heat source (20);
- a third heat exchanger (W3) for completely condensing the expanded working medium flow (12a);
- a separator (4) for separating a liquid phase (19) from a vapor phase (10) of the second working medium flow (18);
- an expansion device (2), in particular a turbine, for expanding the vapor phase (10), converting its energy to a usable form, and producing an expanded vapor phase (11);
- a combination point (5) for producing the expanded working medium flow (12) by combining the liquid phase (19) and the expanded vapor phase (11);
- and wherein the working medium of the thermodynamic circuit consists of a multiple-substance mixture;
**characterized by** a bypass line (31) for bypassing the expansion device (2) and the first heat exchanger (W1), which branches off from a line (32) between the separator (4) and the expansion device (2) and opens into a line (30) between the first heat exchanger (W1) and the third heat exchanger (W3).

7. Thermodynamic circuit according to Claim 6, wherein a further separator (40) for separating a liquid phase from a vapor phase, and a mixer (41) for mixing the liquid and vapor phases which have been separated by the further separator (40), are connected in the line (30) between the first heat exchanger (W1) and the third heat exchanger (W3) between the opening (35) of the bypass line (31) and the third heat exchanger (W3).

8. Thermodynamic circuit according to Claim 7,
wherein the multiple-substance mixture is a two-substance mixture, in particular an ammonia-water mixture.

9. Thermodynamic circuit according to one of Claims 6 to 8, having a geothermal liquid, in particular thermal water, as the external heat source (20).

10. Thermodynamic circuit according to one of Claims 6 to 9, wherein the external heat source (20) is at a temperature of 100°C to 200°C, in particular from 100°C to 140°C.

## Revendications

1. Procédé pour faire fonctionner un circuit thermodynamique, qui utilise comme fluide de travail un mélange à plusieurs substances et qui comprend au moins les éléments suivants :
- un premier échangeur de chaleur ( W1 ) de production d'un premier courant ( 15 ) de fluide de travail réchauffé ou évaporé partiellement par réchauffement ou par évaporation partielle d'un courant ( 14 ) de fluide de travail liquide par cession de chaleur par un courant ( 12 ) de fluide de travail détendu ;
- un deuxième échangeur de chaleur ( W2 ) de production d'un deuxième courant ( 18 ) de fluide de travail évaporé au moins en partie par évaporation au moins en partie ou évaporation supplémentaire du premier courant ( 15 ) de fluide de travail par de la chaleur, qui est cédée par une source ( 20 ) de chaleur extérieure ;
- un troisième échangeur de chaleur ( W3 ) pour condenser complètement le courant ( 12 et 12a ) de fluide de travail détendu ;
- un séparateur ( 4 ) pour séparer une phase ( 19 ) liquide d'une phase ( 10 ) sous forme de vapeur du deuxième courant ( 18 ) de fluide de travail ;
- un dispositif ( 2 ) de détente, notamment une turbine, pour détendre la phase ( 10 ) sous forme de vapeur, transformer son énergie en une forme utilisable et produire une phase ( 11 ) sous forme de vapeur détendue ;
- une jonction ( 5 ) pour produire le courant ( 12 ) de fluide de travail détendu par une réunion de la phase liquide et de la phase sous forme de vapeur détendue ;
**caractérisé en ce que**, pour le démarrage du circuit
- on fait contourner par la phase ( 10 ) sous forme de vapeur séparée par le séparateur ( 4 ) le dispositif ( 2 ) de détente et le premier échangeur ( W1 ) de chaleur,
- on envoie, en passant par la jonction ( 5 ), la phase ( 19 ) liquide séparée par le séparateur ( 4 ) au premier échangeur de chaleur ( W1 ) et on l'y refroidit par cession de chaleur au courant ( 14 ) de fluide de travail liquide et
- après le premier échangeur de chaleur ( W1 ), on réunit la phase liquide refroidie et séparée et la phase ( 10 ) sous forme de vapeur séparée en un courant de fluide de travail refroidi.

2. Procédé suivant la revendication 1, dans lequel on sépare l'une de l'autre une phase liquide et une phase sous forme de vapeur du courant de fluide de travail refroidi et ensuite on les réunit à nouveau.

3. Procédé suivant la revendication 2, dans lequel on utilise comme mélange à plusieurs substances un mélange à deux substances, notamment un mélange d'ammoniac et d'eau.

4. Procédé suivant l'une des revendications précédentes, dans lequel on utilise comme source ( 20 ) extérieure de chaleur un liquide géothermique, notamment de l'eau thermale.

5. Procédé suivant l'une des revendications précédentes, dans lequel la source ( 20 ) de chaleur a une température de 100°C à 200°C, notamment de 100°C à 140°C.

6. Circuit thermodynamique, notamment pour effectuer le procédé suivant l'une des revendications précédentes, comprenant au moins
- un premier échangeur de chaleur ( W1 ) de production d'un premier courant ( 15 ) de fluide de travail réchauffé ou évaporé partiellement par réchauffement ou par évaporation partielle d'un courant ( 14 ) de fluide de travail liquide par cession de chaleur par un courant ( 12 ) de fluide de travail détendu ;
- un deuxième échangeur de chaleur ( W2 ) de production d'un deuxième courant ( 18 ) de fluide de travail évaporé au moins en partie par évaporation au moins en partie ou évaporation supplémentaire du premier courant ( 15 ) de fluide de travail par de la chaleur, qui est cédée par une source ( 20 ) de chaleur extérieure ;
- un troisième échangeur de chaleur ( W3 ) pour condenser complètement le courant ( 12 et 12a ) de fluide de travail détendu ;
- un séparateur ( 4 ) pour séparer une phase ( 19 ) liquide d'une phase ( 10 ) sous forme de vapeur du deuxième courant ( 18 ) de fluide de travail ;
- un dispositif ( 2 ) de détente, notamment une turbine, pour détendre la phase ( 10 ) sous forme de vapeur, transformer son énergie en une forme utilisable et produire une phase ( 11 ) sous forme de vapeur détendue ;
- une jonction ( 5 ) pour produire le courant ( 12 ) de fluide de travail détendu par une réunion de la phase liquide et de la phase sous forme de vapeur détendue ;
et dans lequel le fluide de travail du circuit thermodynamique est constitué d'un mélange de plusieurs substances ;
**caractérisé par** un conduit ( 31 ) de contournement du dispositif ( 2 ) de détente et du premier échangeur ( W1 ) de chaleur, qui bifurque d'un conduit ( 32 ) entre le séparateur ( 4 ) et le dispositif ( 2 ) de détente et débouche dans un conduit ( 30 ) entre le premier échangeur de chaleur ( W1 ) et le troisième échangeur de chaleur ( W3 ).

7. Circuit thermodynamique suivant la revendication 6, dans lequel il est monté dans le conduit ( 30 ), entre le premier échangeur de chaleur ( W1 ) et le troisième échangeur de chaleur ( W3 ) entre l'embouchure ( 35 ) du conduit ( 31 ) de contournement et le troisième échangeur de chaleur ( W3 ), un autre séparateur ( 40 ) pour séparer une phase liquide d'une phase sous forme de vapeur et un mélangeur ( 41 ) pour mélanger la phase liquide et la phase sous forme de vapeur séparée par l'autre séparateur ( 40 ).

8. Circuit thermodynamique suivant la revendication 7, dans lequel le mélange à plusieurs substances est un mélange à deux substances, notamment un mélange d'ammoniac et d'eau.

9. Circuit thermodynamique suivant l'une des revendications 6 à 8, comprenant un liquide géothermique, notamment de l'eau thermale comme source ( 20 ) extérieure de chaleur.

10. Circuit thermodynamique suivant l'une des revendications 6 à 9, dans lequel la source ( 20 ) extérieure de chaleur a une température de 100°C à 200°C, notamment de 100°C à 140°C.
